# EUROPÄISCHE PATENTANMELDUNG

(11) **EP 3 705 779 A1**
(43) Veröffentlichungstag der Anmeldung: **09.09.2020**
(21) Anmeldenummer: 19161575.6
(22) Anmeldetag: 08.03.2019
(51) Int. Cl.: F23J 13/04, F23L 11/00, F16L 29/02

(54) **ABGASLEITUNGSSYSTEM**

(71) Anmelder: Centrotherm Systemtechnik GmbH, 59929 Brilon (DE)
(72) Erfinder: VAN DIJK, Floris, 6983AA Doesburg (NL); LIESE, Ralf, 59909 Bestwig- OT Ostwig (DE); DELVEAUX, Herr Mario, 34431 Marsberg (DE)
(74) Vertreter: Zenz Patentanwälte Partnerschaft mbB

(57) **Zusammenfassung**

Die Erfindung betrifft ein Abgasleitungssystem (8) zum Leiten von Abgas von einer Verbrennungseinrichtung (5) zu einem Abgasstrang (7), aufweisend eine erste Abgasleitung (9) mit einem Einlassende (12) und einem Auslassende (14), und eine zweite Abgasleitung (10) mit einem ersten Leitungsende (15) und einem zweiten Leitungsende (16), wobei das Einlassende (12) der ersten Abgasleitung (9) mit dem ersten Leitungsende (15) der zweiten Abgasleitung (10) über eine lösbare Kopplungsverbindung (18) verbindbar ist, wobei innerhalb der ersten Abgasleitung (9) ein zwischen einer einen Durchlass (21) verschließenden Schließstellung und einer den Durchlass (21) öffnenden Öffnungsstellung bewegbares Verschlusselement (11) angeordnet ist, wobei bei aufgehobener Kopplungsverbindung (18) das Verschlusselement (11) in der Schließstellung selbsttätig angeordnet ist, und wobei die zweite Abgasleitung (10) ein Betätigungselement (40) aufweist, welches bei hergestellter Kopplungsverbindung (18) das Verschlusselement (11) in der Öffnungsstellung gedrängt anordnet.

## Beschreibung

Die Erfindung richtet sich auf ein Abgasleitungssystem zum Leiten von Abgas von einer Verbrennungseinrichtung zu einem Abgasstrang, aufweisend eine Abgasleitung mit einem Einlassende und einem Auslassende, welches mit dem Abgasstrang verbindbar ausgebildet ist, wobei innerhalb der ersten Abgasleitung ein zwischen einer einen Durchlass von Einlassende zu Auslassende verschließenden Schließstellung und einer den Durchlass öffnenden Öffnungsstellung bewegbares Verschlusselement angeordnet ist.

Ausgangspunkt für die Erfindung sind bekannte Abgasleitungssysteme in Mehrfamilienhäusern. Diese bekannten Abgasleitungssysteme verbinden eine in einer Wohnung des Mehrfamilienhauses vorhandene Verbrennungseinrichtung mit einem Abgasstrang, welcher zu einem Kamin führt und an welchen alle Verbrennungseinrichtungen der einzelnen Wohnungen angeschlossen sind. Für eine solche Einbausituation ist zu berücksichtigen, dass es durchaus vorkommen kann, dass die Wohnungen zu unterschiedlichen Zeitpunkten bezugsfertig sind, so dass eine Verbrennungseinrichtung einer Wohnung bereits in Betrieb ist und das Abgas über den gemeinsamen Abgasstrang zu dem Kamin geführt wird, während in einer anderen Wohnung zwar eine Abgasleitung mit dem Abgasstrang verbunden ist, die Verbrennungseinrichtung aber noch gar nicht eingebaut ist. In einem solchen Fall ist es bekannt, dass eine Abdeckkappe ein Einlassende der bereits eingebauten und mit dem Abgasstrang verbundenen Abgasleitung verschließt, damit kein Abgas, welches aus einer anderen Wohnung von einer dort im Betrieb befindlichen Verbrennungseinrichtung in den Abgasstrang gefördert wird, in die Wohnung gelangt, bei der noch keine Verbrennungseinrichtung an die Abgasleitung angeschlossen ist. Solche Abdeckkappen werden auch verwendet, wenn Wartungsarbeiten an einer Verbrennungseinrichtung durchgeführt werden, bei denen es erforderlich ist, dass die Abgasleitung zwischen dem Abgasstrang und der Verbrennungseinrichtung auseinander gebaut wird. Eine solche Abdeckkappe ist dabei nicht besonders sicher an der zum Abgasstrang führenden Abgasleitung angebracht, so dass die Gefahr besteht, dass die Abdeckkappe sich löst und Abgas in die Wohnung gelangen kann.

Der Erfindung liegt daher die Aufgabe zugrunde, ein Abgasleitungssystem der vorstehend genannten Art bereitzustellen, bei dem die genannte Gefahr nicht besteht und welches ein Verschlusselement bereitstellt, welches automatisch eine Abgasleitung verschließt, wenn dies erforderlich sein sollte.

Diese Aufgabe wird gemäß der Erfindung gelöst durch ein Abgasleitungssystem zum Leiten von Abgas von einer Verbrennungseinrichtung zu einem Abgasstrang. Das erfindungsgemäße Abgasleitungssystem umfasst eine erste Abgasleitung mit einem Einlassende und einem Auslassende, welches mit dem Abgasstrang verbindbar ausgebildet ist, und eine zweite Abgasleitung mit einem ersten Leitungsende und einem zweiten Leitungsende, welches mit der Verbrennungseinrichtung verbindbar ausgebildet. Das Einlassende der ersten Abgasleitung ist mit dem ersten Leitungsende der zweiten Abgasleitung über eine lösbare Kopplungsverbindung verbindbar ist, wobei innerhalb der ersten Abgasleitung ein zwischen einer einen Durchlass von Einlassende zu Auslassende verschließenden Schließstellung und einer den Durchlass öffnenden Öffnungsstellung bewegbares Verschlusselement angeordnet ist. Bei aufgehobener Kopplungsverbindung ist das Verschlusselement in der Schließstellung selbsttätig angeordnet. Gemäß der Erfindung weist die zweite Abgasleitung ein Betätigungselement auf, welches bei hergestellter Kopplungsverbindung das Verschlusselement in der Öffnungsstellung gedrängt anordnet.

Vorteilhafte und zweckmäßige Ausgestaltungen und Weiterbildungen der Erfindung ergeben sich aus den Unteransprüchen.

Durch die Erfindung wird ein Abgasleitungssystem zur Verfügung gestellt, welches sich durch eine einfache und zweckmäßige Konstruktion auszeichnet, um die vorstehend genannte Gefahr zu vermeiden. Das erfindungsgemäße Abgasleitungssystem besteht aus einer ersten Abgasleitung und einer zweiten Abgasleitung, wobei das innerhalb der ersten Abgasleitung angeordnete Verschlusselement nur dann aus seiner Schließstellung in seine Öffnungsstellung bewegbar ist, wenn die zweite Abgasleitung über die Kopplungsverbindung mit der ersten Abgasleitung verbunden ist. Denn nur dann kann das Betätigungselement der zweiten Abgasleitung auf das Verschlusselement einwirken und das Verschlusselement in die Öffnungsstellung bewegen. Das erfindungsgemäße Abgasleitungssystem besteht somit aus zwei aufeinander abgestimmte Abgasleitungen, wobei das Verschlusselement nur mit Hilfe der zweiten Abgasleitung mit dem Betätigungselement in die Öffnungsstellung bewegt werden kann, was mit keiner anderen herkömmlichen Abgasleitung möglich ist. Es handelt sich folglich bei der Erfindung um ein Set aus Abgasleitungen, wobei das Verschlusselement in der Abgasleitung angeordnet ist, die bereits in einer Wand eines Gebäudes verbaut ist, wobei nur die zu dieser Abgasleitung passende zweite Abgasleitung in der Lage ist, bei hergestellter Kopplungsverbindung das Verschlusselement in die Öffnungsstellung zu bewegen und damit den Durchlass zu dem Abgasstrang freizugeben. Solange die Kopplungsverbindung hergestellt ist, befindet sich das Verschlusselement in der Öffnungsstellung. Das Verschlusselement ist nur in der Schließstellung angeordnet, wenn die zweite Abgasleitung nicht mit der ersten Abgasleitung verbunden ist.

Die Erfindung sieht in Ausgestaltung vor, dass das Verschlusselement als eine drehbar gelagerte und axial verschiebbare Absperrklappe ausgebildet ist. Die Ausgestaltung als Absperrklappe weist den Vorteil eines geringen Strömungswiderstandes im Vergleich zu anderen Absperrmitteln auf.

Von besonderem Vorteil ist es, wenn das Betätigungselement die Absperrklappe bei einer Bewegung in die Öffnungsstellung in Richtung des Auslassendes bewegend ausgebildet. Der Rand der Absperrklappe liegt in der Schließstellung auf einem Dichtsitz auf, wobei der Rand mit einer Dichtlippe versehen ist. Die Bewegung aus der Schließstellung in die Öffnungsstellung ist dabei eine Drehbewegung der Absperrklappe, wodurch die Dichtlippe bei ausschließlicher Drehung stark belastet würde und die Gefahr bestünde, dass die Dichtlippe umklappt und bei einer Bewegung zurück in die Schließstellung keine ausreichende Dichtwirkung erzielt wird. Dadurch, dass die Absperrklappe erfindungsgemäß bei ihrer Bewegung in die Öffnungsstellung zusätzlich axial in Richtung des Auslassendes und bei ihrer Bewegung in die Schließstellung ebenfalls axial in Richtung des Einlassendes auf den Dichtsitz bewegt wird, besteht diese Gefahr nun nicht mehr.

Zur Realisierung der Axialbewegung und Drehbewegung der Absperrklappe sieht die Erfindung in Ausgestaltung vor, dass an der Absperrklappe zwei sich gegenüberliegende Lagerzapfen ausgebildet sind, die jeweils in einer innenseitig in der ersten Abgasleitung ausgebildeten Führungsbahn geführt angeordnet sind.

Konstruktiv von Vorteil und für eine kompakte Bauform ist in Ausgestaltung der Erfindung vorgesehen, dass sich die Lagerzapfen mit Bezug auf die Schließstellung der Absperrklappe in Richtung des Auslassendes und radial von der Absperrklappe erstrecken.

Gemäß einer ersten Ausführungsform sieht die Erfindung vor, dass eine Teilleitung innerhalb der ersten Abgasleitung in Richtung des Auslassendes bewegbar gelagert ist und abschnittsweise aus dem Einlassende herausragt. Die Teilleitung dient dabei zur Bewegung der Absperrklappe, weshalb die Teilleitung bewegbar innerhalb der ersten Abgasleitung angeordnet ist.

Von besonderem Vorteil ist es dabei, wenn in einer weiteren Ausgestaltung in der Teilleitung zwei sich gegenüberliegende und in axialer Richtung erstreckende Bewegungsausnehmungen ausgebildet sind, in welchen jeweils ein innenseitig der ersten Abgasleitung und zwischen der Absperrklappe und dem Einlassende ausgebildeter Führungsansatz angeordnet ist.

Die Teilleitung ist in der Schließstellung der Absperrklappe in einer mit Bezug auf das Auslassende rückwärtigen Position angeordnet und wird bei einer Bewegung der Absperrklappe in Richtung des Auslassendes bewegt. Die Erfindung sieht hierzu vor, dass die Teilleitung gegen die Kraft eines mechanischen Rückstellelements entlang des jeweiligen Führungsansatzes in Richtung des Auslassendes bewegbar gelagert ist.

Hinsichtlich der Bewegung der Absperrklappe sieht die Erfindung in weiterer Ausgestaltung vor, dass an der Absperrklappe zwei Führungsbahnen ausgebildet sind, welche mit Bezug auf die Schließstellung auf der dem Einlassende zugewandten Seite der Absperrklappe ausgebildet sind, wobei an der Teilleitung zwei Schwenkzapfen endseitig der Bewegungsausnehmungen ausgebildet sind, welche in die Führungsbahnen der Absperrklappe eingreifen, wobei bei einer Bewegung der Absperrklappe aus der Schließstellung in die Öffnungsstellung die Schwenkzapfen von einem Ende der zugeordneten Führungsbahnen zu dem anderen Ende der zugeordneten Führungsbahnen bewegend und die Absperrklappe zunächst in Richtung des Auslassendes axial bewegend und anschließend um die Lagerzapfen verschwenkend ausgebildet sind.

Eine konstruktiv günstige Möglichkeit zur Realisierung der Bewegung der Teilleitung ist in weiterer Ausgestaltung dadurch gegeben, dass an dem aus dem Einlassende herausragenden Ende der Teilleitung ein radial nach außen abstehender Betätigungskragen ausgebildet ist, wobei das Betätigungselement als ein radialer Steg ausgebildet ist, welcher bei hergestellter Kopplungsverbindung die Teilleitung in Richtung des Auslassendes verschoben anordnet und das Verschlusselement in der Öffnungsstellung gedrängt anordnet.

Gemäß einer weiteren Ausführungsform sieht die Erfindung vor, dass die Absperrklappe mit einem innerhalb der ersten Abgasleitung angeordneten Betätigungsarm gekoppelt ist, wobei der Betätigungsarm zwischen der Absperrklappe und dem Einlassende angeordnet ist, und wobei der Betätigungsarm in Schließstellung in einer in Richtung des Einlassendes zurückgezogenen Halteposition angeordnet ist und bei hergestellter Kopplungsverbindung in Richtung des Auslassendes bewegt und die Absperrklappe in der Öffnungsstellung haltend angeordnet ist. Diese Ausführungsform ist somit kompakter und kommt ohne die Teilleitung aus, um die Absperrklappe zu bewegen.

In weiterer Ausgestaltung der weiteren Ausführungsform sieht die Erfindung vor, dass der Betätigungsarm in einer an der ersten Abgasleitung ausgebildeten Führungsschiene axial bewegbar gelagert ist. Folglich ist keine aufwendige Schwenkbewegung sondern lediglich eine axiale Bewegung für den Betätigungsarm vorgesehen.

Zur Bewegungskopplung mit der Absperrklappe ist es von baulichem Vorteil, wenn der Betätigungsarm endseitig eine Schwenkausnehmung aufweist, in welche ein Schwenkzapfen bewegbar und geführt angeordnet ist, wobei der Schwenkzapfen mit Bezug auf die Schließstellung auf der dem Einlassende zugewandten Seite der Absperrklappe ausgebildet ist.

Ferner ist in Ausgestaltung der weiteren Ausführungsform vorgesehen, dass das Betätigungselement als ein innenseitig der zweiten Abgasleitung ausgebildeter Stößel ausgebildet ist, welcher den Betätigungsarm gegen die Kraft eines mechanischen Rückstellelements in Richtung des Auslassendes bewegt anordnet.

Für beide Ausführungsformen ist in Ausgestaltung der Erfindung vorgesehen, dass die lösbare Kopplungsverbindung als eine Gewindeverbindung, eine Bajonettverbindung, eine Rastverbindung oder eine kraftschlüssige und/oder formschlüssige Klemmverbindung ausgebildet ist. Diese Möglichkeiten der Ausbildung gewährleisten jeweils eine sichere und stabile Verbindung.

Die Erfindung kann dahingehend ergänzt werden, dass gemäß einer Ausgestaltung die erste Abgasleitung von einer ersten Verbrennungsluftleitung umgeben ist, wobei die zweite Abgasleitung von einer zweiten Verbrennungsluftleitung umgeben ist, wobei die erste Verbrennungsluftleitung und die zweite Verbrennungsluftleitung miteinander verbindbar ausgebildet sind, und wobei ein umlaufender Spalt zwischen der ersten und zweiten Verbrennungsluftleitung und der ersten und zweiten Abgasleitung zur Führung von Verbrennungsluft in Richtung des zweiten Leitungsendes ausgebildet ist. Damit ist beispielsweise eine konzentrische Leitungsanordnung realisierbar, sofern die einzelnen Leitungen rohrförmig und im Querschnitt kreisrund ausgebildet sind, wobei die Abgasleitungen dann eine Art Innenrohr darstellen, welches von einem von den Verbrennungsluftleitungen gebildeten Außenrohr konzentrisch umgeben ist, wobei durch den Ringspalt dann die zur Verbrennung erforderliche Verbrennungsluft zu der Verbrennungseinrichtung gefördert wird.

Zur Herstellung und Aufhebung der Kopplungsverbindung, welche bei einer konzentrischen Rohranordnung von außen von einem Benutzer nicht mehr handhabbar ist, sieht die Erfindung in Ausgestaltung vor, dass an dem ersten Leitungsende der zweiten Abgasleitung ein Außengewinde ausgebildet ist, wobei die zweite Verbrennungsluftleitung an dem mit der ersten Verbrennungsluftleitung zu verbindenden Ende über eine Rastverbindung mit einem Verbindungselement verbunden ist, welches innerhalb der zweiten Verbrennungsluftleitung angeordnet ist und ein Innengewinde aufweist, und wobei das Innengewinde des Verbindungselements mit dem Außengewinde der zweiten Abgasleitung derart in Eingriff bringbar ist, dass durch eine Betätigung der zweiten Verbrennungsluftleitung die Kopplungsverbindung herstellbar oder aufhebbar ist.

Dabei ist es von besonderem Vorteil, wenn die Rastverbindung von Rasthaken gebildet ist, welche einen ersten Umfangsrand und einen zweiten Umfangsrand des Verbindungselements abwechselnd hintergreifen. Dadurch ist eine Bewegung der zweiten Abgasleitung in beide axiale Richtungen möglich.

Schließlich ist in Ausgestaltung der Erfindung vorgesehen, dass an dem Verbindungselement wenigstens eine Verbindungsausnehmung ausgebildet ist, und wobei einer der Rasthaken derart in der Verbindungsausnehmung liegend angeordnet ist, dass das Verbindungselement und die zweite Verbrennungsluftleitung formschlüssig miteinander verbunden sind. Durch die formschlüssige Verbindung ist sichergestellt, dass bei Drehung der zweiten Verbrennungsluftleitung auch das Verbindungselement mitgedreht wird, um die zweite Abgasleitung zu drehen, wodurch letztlich die Kopplungsverbindung zwischen der ersten Abgasleitung und der zweiten Abgasleitung entweder hergestellt oder gelöst wird.

Es versteht sich, dass die vorstehend genannten und nachstehenden noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Der Rahmen der Erfindung ist nur durch die Ansprüche definiert.

Weitere Einzelheiten, Merkmale und Vorteile des Gegenstandes der Erfindung ergeben sich aus der nachfolgenden Beschreibung im Zusammenhang mit der Zeichnung, in der beispielhafte und bevorzugte Ausführungsbeispiele der Erfindung dargestellt sind.

In der Zeichnung zeigt:
Figur 1 eine schematische Seitenansicht eines Mehrfamilienhauses,
Figur 2 eine perspektivische Ansicht auf ein erfindungsgemäßes Abgasleitungssystem gemäß einer ersten Ausführungsform,
Figur 3 eine weitere perspektivische Ansicht auf das in Figur 2 gezeigte Abgasleitungssystem, bei welchem eine Kopplungsverbindung zwischen einer ersten Abgasleitung und einer zweiten Abgasleitung aufgehoben ist,
Figur 4 eine perspektivische Schnittansicht auf die zweite Abgasleitung,
Figur 5 eine seitliche Schnittansicht auf die erste Abgasleitung mit einem darin angeordneten Verschlusselement und einer an der ersten Abgasleitung bewegbar gelagerten Teilleitung,
Figur 6 eine weitere Schnittansicht auf die erste Abgasleitung,
Figur 7 eine perspektivische Schnittansicht auf die Teilleitung,
Figur 8 eine Perspektivdarstellung der Teilleitung,
Figur 9 eine perspektivische Ansicht auf die erste Abgasleitung,
Figur 10 eine seitliche Darstellung der mit dem Verschlusselement bewegungsgekoppelten Teilleitung,
Figur 11 eine seitliche Schnittansicht auf die erste Abgasleitung mit dem in einer Schließstellung angeordneten Verschlusselement,
Figur 12 eine seitliche Schnittansicht auf die erste Abgasleitung, welche mit der zweiten Abgasleitung über die Kopplungsverbindung verbunden ist, wobei das Verschlusselement in einer Öffnungsstellung angeordnet ist,
Figur 13 eine perspektivische Ansicht auf ein erfindungsgemäßes Abgasleitungssystem gemäß einer zweiten Ausführungsform,
Figur 14 eine weitere perspektivische Ansicht auf das in Figur 13 gezeigte Abgasleitungssystem, bei welchem die Kopplungsverbindung zwischen der ersten Abgasleitung und der zweiten Abgasleitung aufgehoben ist,
Figur 15 eine perspektivische Schnittansicht auf die zweite Abgasleitung für die zweite Ausführungsform,
Figur 16 eine seitliche Schnittansicht auf die erste Abgasleitung für die zweite Ausführungsform,
Figur 17 eine perspektivische Schnittdarstellung der ersten Abgasleitung für die zweite Ausführungsform,
Figur 18 eine Perspektivansicht des Verschlusselements und eines damit bewegungsgekoppelten Betätigungsarms gemäß der zweiten Ausführungsform,
Figur 19 eine seitliche Schnittansicht auf die erste Abgasleitung gemäß der zweiten Ausführungsform, wobei das Verschlusselement in der Schließstellung angeordnet ist,
Figur 20 eine seitliche Schnittansicht auf die erste Abgasleitung gemäß der zweiten Ausführungsform, welche mit der zweiten Abgasleitung über die Kopplungsverbindung verbunden ist, wobei das Verschlusselement in der Öffnungsstellung angeordnet ist,
Figur 21 eine konzentrische Ausführungsform des erfindungsgemäßen Abgasleitungssystems mit einer ersten Verbrennungsluftleitung und einer zweiten Verbrennungsluftleitung,
Figur 22 eine seitliche Schnittansicht der konzentrischen Ausführungsform des erfindungsgemäßen Abgasleitungssystems,
Figur 23 eine Perspektivdarstellung eines Verbindungselements der konzentrischen Ausführungsform des erfindungsgemäßen Abgasleitungssystems,
Figur 24 eine perspektivische Ansicht der zweiten Verbrennungsluftleitung,
Figur 25 eine perspektivische Schnittansicht auf das Verbindungselement und die zweite Verbrennungsluftleitung, und
Figur 26 eine Rückansicht auf das Verbindungselement und die zweite Verbrennungsluftleitung.

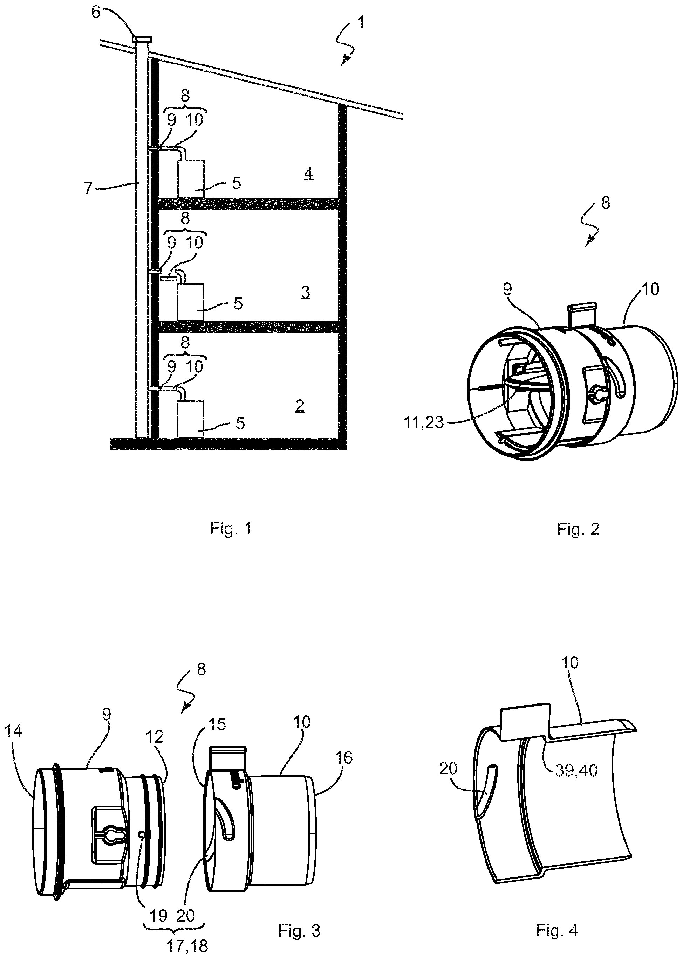

In Figur 1 ist schematisch eine Seitenansicht eines Mehrfamilienhauses 1 mit drei Wohneinheiten 2, 3 und 4 gezeigt. In den einzelnen Wohneinheiten 2, 3, 4 ist jeweils eine Verbrennungseinrichtung 5 installiert, wobei die jeweilige Verbrennungseinrichtung 5 der unteren und oberen Wohneinheit 2 und 4 mit einem zentralen und zu einem Kamin 6 führenden Abgasstrang 7 verbunden sind. Die Verbindung zwischen Verbrennungseinrichtung 5 und Abgasstrang 7 wird mittels eines erfindungsgemäßen Abgasleitungssystems 8 realisiert. Das Abgasleitungssystem 8 dient folglich zum Leiten von Abgas von der Verbrennungseinrichtung 5 zu dem Abgasstrang 7 und weist dabei eine erste Abgasleitung 9 und eine zweite Abgasleitung 10 auf, wobei innerhalb der ersten Abgasleitung 9 ein in Figur 1 nicht gezeigtes Verschlusselement 11 angeordnet ist und die erste Abgasleitung 9 fest in der Wand verbaut ist. Für die Wohneinheiten 2 und 4 befindet sich das jeweilige Verschlusselement 11 in einer Öffnungsstellung, so dass Abgas von der Verbrennungseinrichtung 5 zu dem Abgasstrang 7 gelangen kann. Wie aus der Figur 1 zu erkennen ist, ist für die Wohneinheit 3 die Verbrennungseinrichtung 5 von dem Abgasstrang 7 getrennt, indem die zweite Abgasleitung 10 demontiert ist. Bei Demontage der zweiten Abgasleitung 10 nimmt das Verschlusselement 11 innerhalb der ersten Abgasleitung 9 selbsttätig eine Schließstellung ein, so dass kein Abgas aus dem Abgasstrang 7 in die Wohneinheit 3 gelangen kann. Das Verschlusselement 11 ist dabei als eine drehbar gelagerte und axial verschiebbare Absperrklappe 23 ausgebildet, worauf nachstehend noch eingegangen wird.

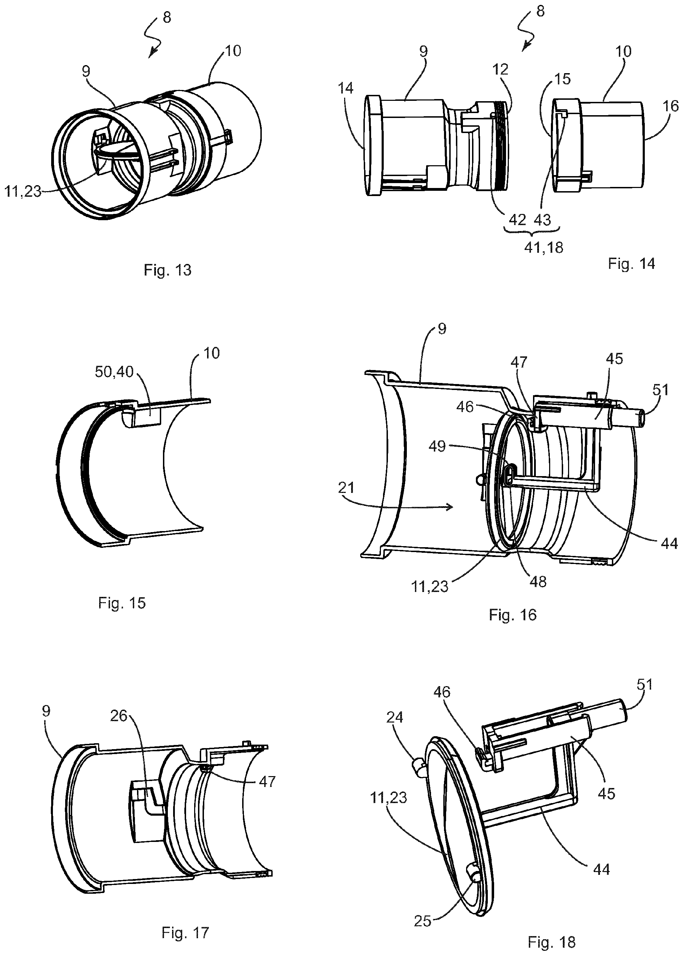

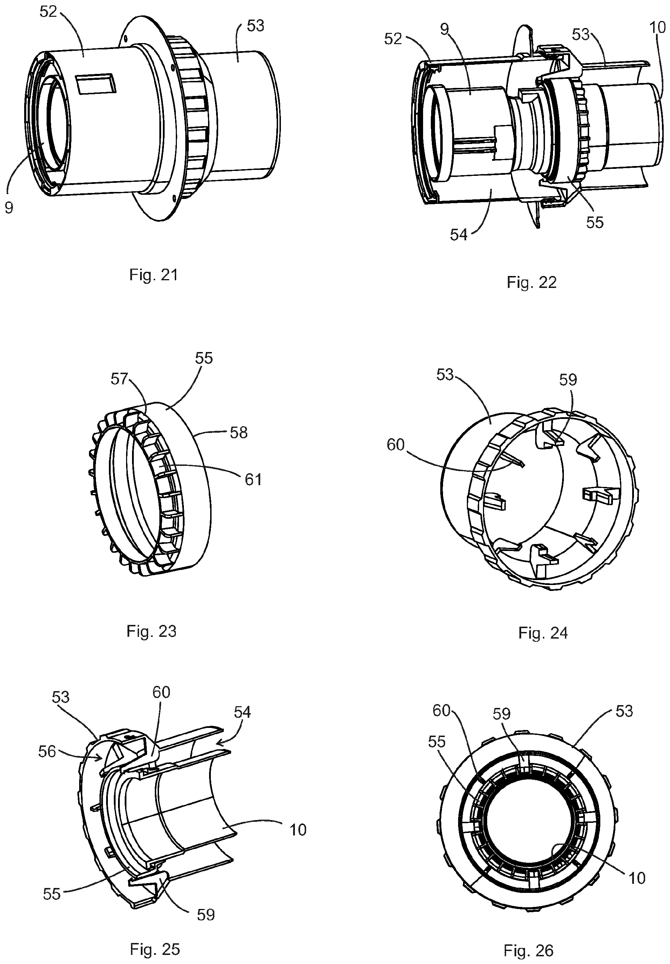

In den Figuren 2 bis 12 ist eine erste Ausführungsform des erfindungsgemäßen Abgasleitungssystems 8 gezeigt, wohingegen in den Figuren 13 bis 20 eine zweite Ausführungsform des erfindungsgemäßen Abgasleitungssystems 8 und in den Figuren 21 bis 26 eine konzentrische Ausführungsform des erfindungsgemäßen Abgasleitungssystems 8 zu sehen ist. Nachstehend werden die Gemeinsamkeiten für alle Ausführungsformen angesprochen, um Wiederholungen zu vermeiden. Die erste Abgasleitung 9 und die zweite Abgasleitung 10 sind rohrförmig und im Querschnitt kreisförmig ausgebildet, wobei auch andere Formen wie beispielsweise ein eckiger oder ovaler Querschnitt denkbar sind. Dabei weist die erste Abgasleitung 9 ein Einlassende 12 und ein Auslassende 14 auf (siehe zum Beispiel die Figuren 3 und 14), wobei das Auslassende 14 mit dem Abgasstrang 7 verbindbar ausgebildet ist. Die zweite Abgasleitung 10 weist ein erstes Leitungsende 15 und ein zweites Leitungsende 16 auf (siehe zum Beispiel die Figuren 3 und 14), wobei das zweite Leitungsende 16 mit der Verbrennungseinrichtung 5 verbindbar ausgebildet ist.

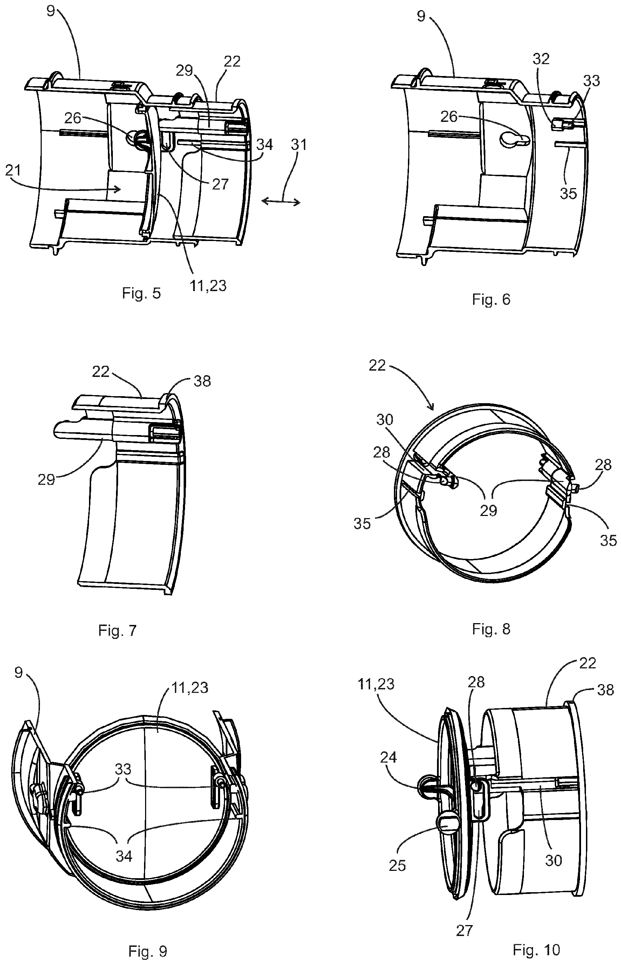

Mit Bezug auf die Figuren 2 bis 12 und damit auf die erste Ausführungsform ist das Einlassende 12 der ersten Abgasleitung 9 mit dem ersten Leitungsende 15 der zweiten Abgasleitung 10 über eine Gewindeverbindung 17 lösbar verbunden. Die Gewindeverbindung 17 stellt ganz allgemein eine lösbare Kopplungsverbindung 18 dar, die bei der ersten Ausführungsform von außenseitig und sich gegenüberliegend angeordneten Zapfen 19, die an der ersten Abgasleitung 9 angeformt sind, und innenseitig und bogenförmig verlaufenden Ausnehmungen 20, die an der zweiten Abgasleitung 10 ausgebildet sind, gebildet ist. Einer der beiden Zapfen 19 ist aus Figur 3 ersichtlich, wohingegen in Figur 4 eine der beiden Ausnehmungen 20 gezeigt ist. In Figur 2 ist die Kopplungsverbindung 18 zwischen der ersten Abgasleitung 9 und der zweiten Abgasleitung 10 hergestellt, wobei bei hergestellter Kopplungsverbindung 18 das Verschlusselement 11 in der Öffnungsstellung gedrängt angeordnet ist. Die Figur 5 zeigt eine seitliche Schnittansicht auf die erste Abgasleitung 9 mit dem darin angeordneten Verschlusselement 11, welches aufgrund der aufgehobenen Kopplungsverbindung 18 in einer einen Durchlass 21 der ersten Abgasleitung 9 verschließenden Schließstellung angeordnet ist, wobei die Figur 5 ferner eine an der ersten Abgasleitung 9 bewegbar gelagerte Teilleitung 22 zeigt. An dem Verschlusselement 11 bzw. an der Absperrklappe 23 sind zwei sich gegenüberliegende Lagerzapfen 24, 25 ausgebildet (siehe zum Beispiel Figur 10), über welche das Verschlusselement 11 an der ersten Abgasleitung 9 bewegbar gelagert ist. Die beiden Lagerzapfen 24, 25 erstrecken sich mit Bezug auf die Schließstellung des Verschlusselements 11 bzw. der Absperrklappe 23 in Richtung des Auslassendes 14 und radial, d.h. seitlich, von der Absperrklappe 23. Die Lagerzapfen 24, 25 der Absperrklappe 23 sind jeweils in einer Führungsbahn 26 angeordnet. Bei der ersten Ausführungsform verläuft die Führungsbahn 26 in eine axiale Richtung und erstreckt sich in Richtung des Auslassendes 14. In den Figuren 5, 6, 11 und 12 ist jeweils nur eine Führungsbahn 26 gezeigt, wobei die andere Führungsbahn 26 der gezeigten Führungsbahn 26 gegenüberliegend angeordnet und innenseitig der ersten Abgasleitung 9 ausgebildet ist. Somit ist die Absperrklappe 23 über ihre Lagerzapfen 24, 25 in den Führungsbahnen 26 sowohl drehbar als auch axial verschiebbar gelagert. Wie insbesondere den Figuren 6 und 27 zu entnehmen ist, ist die Führungsbahn 26 mit einem sich in Richtung des Auslassendes 14 erweiterten Bereich ausgebildet, wobei die Lagerzapfen 24, 25 eine bestimmte Lagerkontur. Durch diese Lagerkontur ist für die Lagerzapfen 24, 25 an dem jeweiligen dem Auslassende 14 abgewandten Ende der Führungsbahn 26 ausschließlich eine axiale Bewegung möglich. Wenn dann die jeweilige Lagerkontur in den erweiterten Bereich, der an dem dem Auslassende 14 zugewandten Ende der Führungsbahn 26 ausgebildet ist, gelangt, ist eine rotatorische Bewegung der Lagerzapfen 24, 25 möglich, aber keine weitere axiale Bewegung.

Wie durch Figur 10 veranschaulicht ist, ist das Verschlusselement 11 bzw. die Absperrklappe 23 mit der Teilleitung 22 bewegungsgekoppelt, wobei die Teilleitung 22 abschnittsweise aus dem Einlassende 12 herausragt (siehe Figur 5). An der Absperrklappe 23 sind am Rand der Absperrklappe 23 zwei sich gegenüberliegende Führungsbahnen bzw. Führungskulissen 27 ausgebildet, wobei in Figur 10 nur die vordere Führungsbahn bzw. Führungskulisse 27 zu erkennen ist. Die Führungsbahnen bzw. Führungskulissen 27 sind mit Bezug auf die Schließstellung auf der dem Einlassende 12 zugewandten Seite der Absperrklappe 23 ausgebildet. Ferner sind an der Teilleitung 22 zwei Schwenkzapfen 28 (siehe Figuren 8 und 10) ausgebildet, die endseitig an Kopplungsansätzen 29 ausgebildet sind, die an der Teilleitung 22 sich gegenüberliegend ausgebildet sind und die sich axial erstrecken. Ein jeweiliger Schwenkzapfen 28 der Teilleitung 22 greift dabei in die zugeordnete Führungsbahn bzw. Führungskulisse 27 der Absperrklappe 23 ein.

Die Teilleitung 22 ist innerhalb der ersten Abgasleitung 9 in Richtung des Auslassendes 14 bewegbar gelagert. Hierzu sind in der Teilleitung 22 sich gegenüberliegende Bewegungsausnehmungen 30 ausgebildet (siehe zum Beispiel Figuren 8 und 9), die sich jeweils in axialer Richtung 31 bis in jeden Kopplungsansatz 29 erstrecken. Innenseitig der ersten Abgasleitung 9 sind ferner Führungsansätze 32 (siehe zum Beispiel Figur 6) ausgebildet, die sich gegenüberliegen und zwischen der Absperrklappe 23 und dem Einlassende 12 ausgebildet sind. Ein jeweiliger Führungsansatz 32 weiset eine zapfenförmige Aufnahme 33 für eine Druckfeder auf, die auf die zapfenförmige Aufnahme 33 aufgesteckt ist und die sich bis zu einem zapfenförmigen Anschlag erstreckt, der in der Bewegungsausnehmung 30 der Teilleitung 22 ausgebildet ist. Die Druckfeder stellt dabei ein mechanisches Rückstellelement dar, gegen dessen Kraft die Teilleitung 22 entlang des jeweiligen Führungsansatzes 32 in Richtung des Auslassendes 14 an der ersten Abgasleitung 9 bewegbar gelagert ist. Zusätzlich ist die Bewegung der Teilleitung 22 durch zwei Führungsstege 34 (siehe zum Beispiel Figur 9), die innenseitig der ersten Abgasleitung 9 ausgebildet sind und sich in axialer Richtung 31 erstrecken, geführt, wobei die Führungsstege 34 in Ausnehmungen 35 (siehe zum Beispiel Figur 8) liegend angeordnet sind, die an der Teilleitung 22 ausgebildet sind. Die Kopplungsansätze 29, die mit der Absperrklappe 23 gekoppelt sind, sind nach Art eines Schlittens geführt und gegen die Kraft des mechanischen Rückstellelements in Richtung der Führungsansätze 32 bewegbar, so dass die Teilleitung in Richtung des Auslassendes 14 innerhalb der ersten Abgasleitung 9 geführt ist.

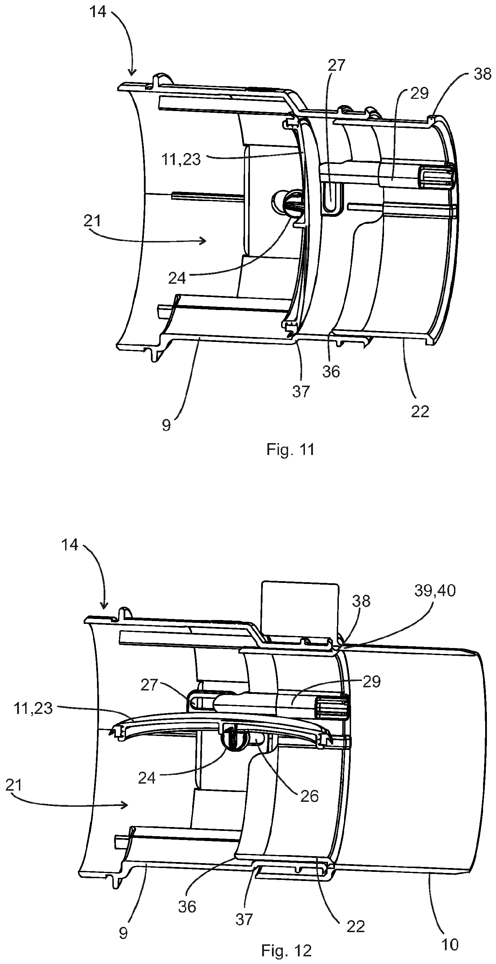

Wenn sich die Teilleitung 22 innerhalb der ersten Abgasleitung 9 in Richtung des Auslassendes 14 bewegt, führt dies aufgrund der Kopplung mit der Absperrklappe 23 zu einer Bewegung der Absperrklappe 23, worauf nachstehend mit Bezug auf die Figuren 11 und 12 eingegangen wird.

Die Figur 11 zeigt die erste Abgasleitung 9 mit dem in der Schließstellung angeordneten Verschlusselement 11, welches die Absperrklappe 23 ist. In der in Figur 11 gezeigten Anordnung drängt das mechanische Rückstellelement die Teilleitung 22 in eine Stellung, in welcher die Teilleitung 22 aus der ersten Abgasleitung 9 hervorsteht. Dabei ist ein innerhalb der ersten Abgasleitung 9 liegender Rand 36 der Teilleitung 22 zwischen einem Dichtsitz 37, welcher von der ersten Abgasleitung 9 innenseitig ausgebildet ist und auf welchem die Absperrklappe 23 in ihrer Schließstellung aufliegt, und dem Einlassende 12 angeordnet. Die Lagerzapfen 24, 25 der Absperrklappe 23 sind innerhalb der Führungsbahn 26 und an einem von dem Auslassende 14 wegweisenden Ende der Führungsbahn 26 angeordnet. In Figur 11 ist die Kopplungsverbindung 18 aufgehoben, da die zweite Abgasleitung 10 von der ersten Abgasleitung 9 demontiert ist. Aufgrund dessen drückt das mechanische Rückstellelement die Teilleitung 22 abschnittsweise aus dem Einlassende 12 heraus, wobei aufgrund der Bewegungskopplung von Teilleitung 22 und Absperrklappe 23 die Absperrklappe 23 in der Schließstellung selbsttätig angeordnet ist. Die Schwenkzapfen 28 der Kopplungsansätze 29 liegen an jeweiligen Enden der Führungsausnehmungen bzw. Führungskulissen 27 der Absperrklappe 23 an.

In Figur 12 ist die zweite Abgasleitung 9 über die Kopplungsverbindung 18 mit der ersten Abgasleitung 10 verbunden, wobei das Verschlusselement 11 bzw. die Absperrklappe 23 in der Öffnungsstellung angeordnet ist. An dem aus dem Einlassende 12 herausragenden Ende der Teilleitung 22 ist ein radial nach außen abstehender Betätigungskragen 38 ausgebildet (siehe zum Beispiel Figuren 7 und 10). An der zweiten Abgasleitung 10 ist ein radialer und stufenförmiger Steg 39 ausgebildet, welcher ein Betätigungselement 40 darstellt (siehe Figur 4). Zur Herstellung der Kopplungsverbindung 18 wird die zweite Abgasleitung 10 über die Gewindeverbindung 17 auf die erste Abgasleitung 9 aufgeschraubt. Dabei drückt das an der zweiten Abgasleitung 10 ausgebildete Betätigungselement 40 gegen den an der Teilleitung 22 ausgebildeten Betätigungskragen 38 und drängt die Teilleitung 22 in Richtung des Auslassendes 14. Folglich ordnet das Betätigungselement 40 bei hergestellter Kopplungsverbindung 18 die Teilleitung 22 in Richtung des Auslassendes 14 verschoben an, wobei die Teilleitung 22 dabei das Verschlusselement 11 in der Öffnungsstellung gedrängt anordnet. Wie Figur 12 zu entnehmen ist, ist in der Öffnungsstellung der Absperrklappe 23 der Rand 36 der Teilleitung 22 nun in Richtung des Auslassendes 14 der ersten Abgasleitung 9 verschoben angeordnet, wobei in Öffnungsstellung der Absperrklappe 23 der Rand 36 zwischen dem Auslassende 14 und dem Dichtsitz 37 liegend angeordnet ist. Aufgrund der Bewegungskopplung der Teilleitung 22 mit der Absperrklappe 23 sind in der Öffnungsstellung der Absperrklappe 23, nachdem die Absperrklappe 23 aus der Schießstellung heraus und die Teilleitung 22 gegen die Kraft des mechanischen Rückstellelements bewegt wurden, die Schwenkzapfen 28 von einem Ende der zugeordneten Führungsbahnen bzw. Führungskulisse 27 zu dem anderen Ende der zugeordneten Führungsbahn bzw. Führungskulisse 27 bewegend angeordnet. Bei der Bewegung der Absperrklappe 23 aus der Schließstellung heraus in Richtung der Öffnungsstellung bewegt das Betätigungselement 40 über die Teilleitung 22 zunächst die Absperrklappe 23 axial in Richtung des Auslassendes 14, wobei die Lagerzapfen 24, 25 der Absperrklappe 23 in Richtung des Auslassendes 14 verschoben werden. Dabei bewegt die Teilleitung 40 die Absperrklappe 23 zunächst von dem Dichtsitz 37 weg und translatorisch in Richtung des Auslassendes 14. An diese axiale und rein translatorische Bewegung schließt sich dann die Drehbewegung der Absperrklappe 23 bzw. der Lagerzapfen 24, 25 an, wodurch die Absperrklappe 23 den Durchlass 21 freigibt. Die Absperrklappe 23 ist somit zunächst in Richtung des Auslassendes 14 axial bewegbar und anschließend um die Lagerzapfen 24, 25 schwenkbar ausgebildet. In der Öffnungsstellung sind die Lagerzapfen 24, 25 an einem dem Auslassende 14 zugewandten Ende der jeweiligen Führungsbahn bzw. Führungskulisse 26 angeordnet.

Mit Bezug auf die Figuren 13 bis 20 ist bei der zweiten Ausführungsform das Einlassende 12 der ersten Abgasleitung 9 mit dem ersten Leitungsende 15 der zweiten Abgasleitung 10 über eine Bajonettverbindung 41 lösbar verbunden. Die Bajonettverbindung 41 stellt die lösbare Kopplungsverbindung 18 dar, die bei der zweiten Ausführungsform von außenseitig und sich gegenüberliegend angeordneten Zapfen 42, die an der ersten Abgasleitung 9 angeformt sind, und Verriegelungsausnehmungen 43, die an dem ersten Leitungsende 15 der zweiten Abgasleitung 10 ausgebildet sind, gebildet ist (siehe zum Beispiel Figur 14). In Figur 13 ist die Kopplungsverbindung 18 zwischen der ersten Abgasleitung 9 und der zweiten Abgasleitung 10 hergestellt, wobei bei hergestellter Kopplungsverbindung 18 das Verschlusselement 11 in der Öffnungsstellung gedrängt angeordnet ist. Die Figur 16 zeigt eine geschnittene Perspektivansicht der ersten Abgasleitung 9 mit dem darin angeordneten Verschlusselement 11, welches aufgrund der aufgehobenen Kopplungsverbindung 18 in einer den Durchlass 21 der ersten Abgasleitung 9 verschließenden Schließstellung angeordnet ist. Auch bei der zweiten Ausführungsform sind an dem Verschlusselement 11 bzw. an der Absperrklappe 23 zwei sich gegenüberliegende Lagerzapfen 24, 25 ausgebildet (siehe zum Beispiel Figur 18), über welche das Verschlusselement 11 an der ersten Abgasleitung 9 bewegbar gelagert ist. Die beiden Lagerzapfen 24, 25 erstrecken sich mit Bezug auf die Schließstellung des Verschlusselements 11 bzw. der Absperrklappe 23 in Richtung des Auslassendes 14 und radial, d.h. seitlich, von der Absperrklappe 23. Auch bei dieser Ausführungsform sind die Lagerzapfen 24, 25 der Absperrklappe 23 jeweils in einer Führungsbahn 26 angeordnet. Jedoch ist bei der zweiten Ausführungsform die Führungsbahn 26 im Wesentlichen L-förmig ausgebildet, wie es zum Beispiel aus Figur 17 ersichtlich ist. Die Führungsbahn 26 unterteilt sich dabei in einen axialen Abschnitt, welcher an dem dem Auslassende 14 abgewandten Ende der Führungsbahn 26 ausgebildet ist, und in einen sich dem axialen Abschnitt anschließenden und vertikal verlaufenden Abschnitt. In den Figuren 17, 19 und 20 ist jeweils nur eine Führungsbahn 26 gezeigt, wobei die andere Führungsbahn 26 der gezeigten Führungsbahn 26 gegenüberliegend angeordnet und innenseitig der ersten Abgasleitung 9 ausgebildet ist. Somit sind die Lagerzapfen 24, 25 in den Führungsbahnen 26 sowohl drehbar als auch axial und vertikal verschiebbar gelagert.

Wie in Figur 16 gezeigt ist, ist das Verschlusselement 11 bzw. die Absperrklappe 23 mit einem innerhalb der ersten Abgasleitung 9 angeordneten Betätigungsarm 44 gekoppelt. Der Betätigungsarm 44 ist zwischen der Absperrklappe 23 und dem Einlassende 12 angeordnet. Ferner ist der Betätigungsarm 44, welcher winkelförmig bzw. L-förmig ausgebildet ist, in einer an der ersten Abgasleitung 9 befestigten Führungsschiene 45 axial bewegbar gelagert (siehe zum Beispiel Figuren 16 und 18). Somit sind die Absperrklappe 23, der Betätigungsarm 44 und die Führungsschiene 45 als eine Baueinheit gemeinsam an der ersten Abgasleitung 9 montierbar, wobei die Montage über eine Rastverbindung erfolgt, welche einen an der Führungsschiene 45 ausgebildeten Rasthaken 46 und eine an der ersten Abgasleitung 9 ausgebildete Rastlasche 47 umfasst (siehe Figuren 16, 17 und 18). Das in der Führungsschiene 45 liegend angeordnete Ende des Betätigungsarms 44 ist dabei gegen die Kraft eines mechanischen Rückstellelements, welches auch bei dieser Ausführungsform eine Druckfeder sein kann, in Richtung des Auslassendes 14 in der Führungsschiene 45 geführt bewegbar. An der Absperrklappe 23 ist mittig ein Schwenkzapfen 48 (siehe Figur 16) ausgebildet. Der Schwenkzapfen 48 ist mit Bezug auf die Schließstellung der Absperrklappe 23 auf der dem Einlassende 12 zugewandten Seite der Absperrklappe 23 ausgebildet. Ferner weist der winkelförmige Betätigungsarm 44 endseitig und an seinem der Führungsschiene 45 abgewandten Ende eine Schwenkausnehmung 49 auf, in welche der Schwenkzapfen 48 der Absperrklappe 23 bewegbar und geführt angeordnet ist. Durch den Schwenkzapfen 48 und die Schwenkausnehmung 49 sind die Absperrklappe 23 und der Betätigungsarm 44 miteinander bewegungsgekoppelt. Ferner ist bei der zweiten Ausführungsform das Betätigungselement 40 als ein innenseitig der zweiten Abgasleitung 10 ausgebildeter Stößel 50 ausgebildet (siehe zum Beispiel Figur 15).

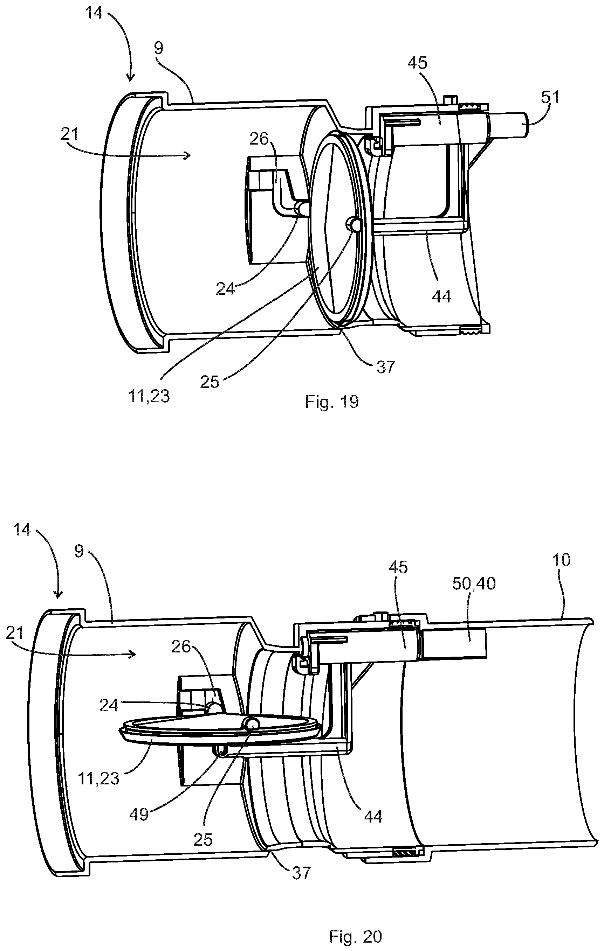

Wenn sich der Betätigungsarm 22 innerhalb der ersten Abgasleitung 9 in Richtung des Auslassendes 14 bewegt, führt dies aufgrund der Kopplung mit der Absperrklappe 23 zu einer Bewegung der Absperrklappe 23, worauf nachstehend mit Bezug auf die Figuren 19 und 20 eingegangen wird.

Die Figur 19 zeigt die erste Abgasleitung 9 mit dem in der Schließstellung angeordneten Verschlusselement 11, welches die Absperrklappe 23 ist. In der in Figur 19 gezeigten Anordnung drängt das mechanische Rückstellelement den Betätigungsarm 44 in eine in Richtung des Einlassendes 12 zurückgezogene Halteposition, so dass in Schließstellung der Absperrklappe 23 der Betätigungsarm 44 in der Halteposition angeordnet ist. Wie aus Figur 20 ersichtlich ist, ist der Betätigungsarm 44 bei hergestellter Kopplungsverbindung 18 in Richtung des Auslassendes 14 bewegt und die Absperrklappe 23 in der Öffnungsstellung haltend angeordnet. Bei Herstellung der Kopplungsverbindung 18 drückt das als Stößel 50 ausgebildete Betätigungselement 40 gegen ein Betätigungsende 51 des Betätigungsarms 44. Das Betätigungsende 51 steht bei aufgehobener Kopplungsverbindung 18 aus der Führungsschiene 45 und dem Einlassende 12 der ersten Abgasleitung 9 hervor, wie es aus Figur 19 ersichtlich ist. Bei hergestellter Kopplungsverbindung 18 drängt dann der Stößel 50 bzw. das Betätigungselement 40 den Betätigungsarm 44 gegen die Kraft eines mechanischen Rückstellelements in Richtung des Auslassendes 14, bis das Betätigungsende 51 innerhalb der Führungsschiene 45 angeordnet ist und der Stößel 50 bzw. das Betätigungselement 40 selbst an der Führungsschiene 45 anliegt, wobei die Führungsschiene 45 eine Bewegungsbegrenzung für das Betätigungselement 40 darstellt. Bei der axialen Bewegung des Betätigungsarms 44 mit Hilfe des Betätigungselements 40 bewegt sich der Betätigungsarm 44 in Richtung des Auslassendes 14. Aufgrund der Bewegungskopplung des Betätigungsarms 44 mit der Absperrklappe 23 ist in der Öffnungsstellung der Absperrklappe 23, nachdem die Absperrklappe 23 aus der Schießstellung heraus und der Betätigungsarm 44 gegen die Kraft des mechanischen Rückstellelements bewegt wurden, der Schwenkzapfen 48 von einem Ende der Schwenkausnehmung 49 zu dem anderen Ende der Schwenkausnehmung 49 bewegend angeordnet. Bei der Bewegung der Absperrklappe 23 aus der Schließstellung heraus in Richtung der Öffnungsstellung bewegt das Betätigungselement 40 über den Betätigungsarm 44 zunächst die Absperrklappe 23 axial in Richtung des Auslassendes 14 und anschließend vertikal, wobei die Lagerzapfen 24, 25 der Absperrklappe 23 in Richtung des Auslassendes 14 und dann vertikal verschoben werden. Dabei bewegt der Betätigungsarm 44 die Absperrklappe 23 zunächst von dem Dichtsitz 37 weg und axial bzw. translatorisch in Richtung des Auslassendes 14. An diese axiale bzw. translatorische Bewegung schließt sich dann die vertikale Bewegung und die Drehbewegung der Absperrklappe 23 an, wodurch die Absperrklappe 23 den Durchlass 21 freigibt. Die Absperrklappe 23 ist somit zunächst in Richtung des Auslassendes 14 axial bewegbar und anschließend um die Lagerzapfen 24, 25 schwenkbar ausgebildet.

In den Figuren 21 bis 26 ist eine weitere Ausführungsform für eine konzentrische Ausgestaltung gezeigt. Bei dieser konzentrischen Ausgestaltung ist die erste Abgasleitung 9 von einer ersten Verbrennungsluftleitung 52 umgeben. Ferner ist die zweite Abgasleitung 10 von einer zweiten Verbrennungsluftleitung 53 umgeben. Die erste Verbrennungsluftleitung 52 und die zweite Verbrennungsluftleitung 53 sind miteinander verbindbar ausgebildet, wobei die Verbindung von einer Gewindeverbindung, Bajonettverbindung, Rastverbindung, oder eine kraftschlüssige und/oder formschlüssige Klemmverbindung oder einer anderen Verbindungsart realisiert werden kann. Die erste Verbrennungsluftleitung 52 bildet zusammen mit der zweiten Verbrennungsluftleitung 53 einen Kanal, wobei zwischen diesem Kanal und der ersten und zweiten Abgasleitung 9, 10 ein umlaufender Spalt 54 ausgebildet ist, welcher zur Führung von Verbrennungsluft in Richtung des zweiten Leitungsendes 16 dient (siehe zum Beispiel Figur 22). Die erste Verbrennungsluftleitung 52 ist wie die erste Abgasleitung 9 in einer Wand eines Hauses, beispielsweise eines Mehrfamilienhauses 1, fest verbaut. Um die Montage dieser konzentrischen Anordnung zu erleichtern, ist an dem ersten Leitungsende 15 der zweiten Abgasleitung 10 ein Außengewinde ausgebildet. Ferner ist ein Verbindungselement 55 vorgesehen, welches ein Innengewinde aufweist. Das Innengewinde des Verbindungselements 55 ist dabei mit dem Außengewinde der zweiten Abgasleitung 10 in Eingriff bringbar. Ferner ist die zweite Verbrennungsluftleitung 53 an dem mit der ersten Verbrennungsluftleitung 52 zu verbindenden Ende über eine Rastverbindung 56 mit dem Verbindungselement 55 verbunden. Das Verbindungselement 55 ist innerhalb der zweiten Verbrennungsluftleitung 53 angeordnet. Das Verbindungselement 55 ist in Figur 23 dargestellt und weist einen ersten Umfangsrand 57 und einen zweiten Umfangsrand 58 auf. Ferner sind an der zweiten Verbrennungsluftleitung 53 Rasthaken 59, 60 ausgebildet, die sich radial nach innen erstrecken. Die Rasthaken 59, 60 hintergreifen abwechselnd den ersten Umfangsrand 57 und den zweiten Umfangsrand 58 des Verbindungselements 55 und sind gleichmäßig umfangsmäßig voneinander beabstandet ausgebildet. Die Rastverbindung 56 ist somit von den Rasthaken 59, 60 wie und dem ersten und zweiten Umfangsrand 57, 58 gebildet. Ferner sind an dem Verbindungselement 55 Verbindungsausnehmung 61 ausgebildet. Die Rasthaken 59 sind dabei derart in den Verbindungsausnehmungen 61 liegend angeordnet, dass das Verbindungselement 55 und die zweite Verbrennungsluftleitung 53 formschlüssig miteinander verbunden sind. Mit Hilfe der Rastverbindung 56 und der formschlüssigen Verbindung ist das Innengewinde des Verbindungselements 55 mit dem Außengewinde der zweiten Abgasleitung 10 derart in Eingriff bringbar, dass durch eine Betätigung, also einer Drehbewegung, der zweiten Verbrennungsluftleitung 53 die Kopplungsverbindung 18 herstellbar oder aufhebbar ist. Bei Drehung der außen liegenden, zweiten Verbrennungsluftleitung 53 dreht sich folglich das Verbindungselement 55 mit, wobei das Verbindungselement 55 durch seine Drehung die Kopplungsverbindung 18 herstellt.

Vorstehend ist ein erfindungsgemäßes Abgasleitungssystem 8 zum Leiten von Abgas von einer Verbrennungseinrichtung 5 zu einem Abgasstrang 7 beschrieben worden. Das Abgasleitungssystem 8 umfasst dabei die erste Abgasleitung 9, welche das Einlassende 12 und das Auslassende 14 aufweist, wobei das Auslassende 14 mit dem Abgasstrang 7 verbindbar ausgebildet ist. Ferner weist das Abgasleitungssystem 8 die zweite Abgasleitung 10 auf, welche mit dem ersten Leitungsende 15 und dem zweiten Leitungsende 16 ausgebildet ist. Dabei ist das zweite Leitungsende 16 mit der Verbrennungseinrichtung 5 verbindbar ausgebildet. Das Einlassende 12 der ersten Abgasleitung 9 ist mit dem ersten Leitungsende 15 der zweiten Abgasleitung 10 über die lösbare Kopplungsverbindung 18 verbindbar, wobei innerhalb der ersten Abgasleitung 9 das zwischen der den Durchlass 21 verschließenden Schließstellung und der den Durchlass 21 öffnenden Öffnungsstellung bewegbare Verschlusselement 11 angeordnet ist. Bei aufgehobener Kopplungsverbindung 18 ist das Verschlusselement 11 in der Schließstellung selbsttätig angeordnet. Die zweite Abgasleitung 10 weist das Betätigungselement 40 auf, welches bei hergestellter Kopplungsverbindung 18 das Verschlusselement 11 in der Öffnungsstellung gedrängt anordnet. Das Verschlusselement 11 ist als drehbar gelagerte und axial verschiebbare Absperrklappe 23 ausgebildet, wobei das Betätigungselement 40 die Absperrklappe 23 bei einer Bewegung in die Öffnungsstellung in Richtung des Auslassendes 14 bewegend ausgebildet.

Die vorstehend beschriebene Erfindung ist selbstverständlich nicht auf die beschriebenen und dargestellten Ausführungsformen beschränkt. Es ist ersichtlich, dass an de in der Zeichnung dargestellten Ausführungsformen zahlreiche, dem Fachmann entsprechend der beabsichtigten Anwendung naheliegende Abänderungen vorgenommen werden können, ohne dass dadurch der Bereich der Erfindung verlassen wird. Beispielsweise kann die lösbare Kopplungsverbindung auch als eine Rastverbindung ausgeführt sein. Zur Erfindung gehört alles dasjenige, was in der Beschreibung enthalten und/oder in der Zeichnung dargestellt ist, einschließlich dessen, was abweichend von den konkreten Ausführungsbeispielen für den Fachmann naheliegt.

## Patentansprüche

1. Abgasleitungssystem (8) zum Leiten von Abgas von einer Verbrennungseinrichtung (5) zu einem Abgasstrang (7), aufweisend
eine erste Abgasleitung (9) mit einem Einlassende (12) und einem Auslassende (14), welches mit dem Abgasstrang (7) verbindbar ausgebildet ist, und
eine zweite Abgasleitung (10) mit einem ersten Leitungsende (15) und einem zweiten Leitungsende (16), welches mit der Verbrennungseinrichtung (5) verbindbar ausgebildet ist,
wobei das Einlassende (12) der ersten Abgasleitung (9) mit dem ersten Leitungsende (15) der zweiten Abgasleitung (10) über eine lösbare Kopplungsverbindung (18) verbindbar ist,
wobei innerhalb der ersten Abgasleitung (9) ein zwischen einer einen Durchlass (21) von Einlassende (12) zu Auslassende (14) verschließenden Schließstellung und einer den Durchlass (21) öffnenden Öffnungsstellung bewegbares Verschlusselement (11) angeordnet ist,
wobei bei aufgehobener Kopplungsverbindung (18) das Verschlusselement (11) in der Schließstellung selbsttätig angeordnet ist, und
wobei die zweite Abgasleitung (10) ein Betätigungselement (40) aufweist, welches bei hergestellter Kopplungsverbindung (18) das Verschlusselement (11) in der Öffnungsstellung gedrängt anordnet.

2. Abgasleitungssystem (8) nach Anspruch 1, wobei das Verschlusselement (11) als eine drehbar gelagerte und axial verschiebbare Absperrklappe (23) ausgebildet ist.

3. Abgasleitungssystem (8) nach Anspruch 2, wobei das Betätigungselement (40) die Absperrklappe (23) bei einer Bewegung in die Öffnungsstellung in Richtung des Auslassendes (14) bewegend ausgebildet.

4. Abgasleitungssystem (8) nach Anspruch 2 oder 3, wobei an der Absperrklappe (23) zwei sich gegenüberliegende Lagerzapfen (24, 25) ausgebildet sind, die jeweils in einer innenseitig in der ersten Abgasleitung (9) ausgebildeten Führungsbahn (26) geführt angeordnet sind.

5. Abgasleitungssystem (8) nach Anspruch 4, wobei sich die Lagerzapfen (24, 25) mit Bezug auf die Schließstellung der Absperrklappe (23) in Richtung des Auslassendes (14) und radial von der Absperrklappe (23) erstrecken.

6. Abgasleitungssystem (8) nach Anspruch 4 oder 5, wobei eine Teilleitung (22) innerhalb der ersten Abgasleitung (9) in Richtung des Auslassendes (14) bewegbar gelagert ist und abschnittsweise aus dem Einlassende (12) herausragt.

7. Abgasleitungssystem (8) nach Anspruch 6, wobei in der Teilleitung (22) zwei sich gegenüberliegende und in axialer Richtung (31) erstreckende Bewegungsausnehmungen (30) ausgebildet sind, in welchen jeweils ein innenseitig der ersten Abgasleitung (9) und zwischen der Absperrklappe (23) und dem Einlassende (12) ausgebildeter Führungsansatz (32) angeordnet ist.

8. Abgasleitungssystem (8) nach Anspruch 7, wobei die Teilleitung (22) gegen die Kraft eines mechanischen Rückstellelements entlang des jeweiligen Führungsansatzes (32) in Richtung des Auslassendes (14) bewegbar gelagert ist.

9. Abgasleitungssystem (8) nach Anspruch 7, wobei an der Absperrklappe (23) zwei Führungsbahnen (27) ausgebildet sind, welche mit Bezug auf die Schließstellung auf der dem Einlassende (12) zugewandten Seite der Absperrklappe (23) ausgebildet sind, wobei an der Teilleitung (22) zwei Schwenkzapfen (24, 25) endseitig der Bewegungsausnehmungen (30) ausgebildet sind, welche in die Führungsbahnen (27) der Absperrklappe (23) eingreifen, wobei bei einer Bewegung der Absperrklappe (23) aus der Schließstellung in die Öffnungsstellung die Schwenkzapfen (28) von einem Ende der zugeordneten Führungsbahnen (27) zu dem anderen Ende der zugeordneten Führungsbahnen (27) bewegend und die Absperrklappe (23) zunächst in Richtung des Auslassendes (14) axial bewegend und anschließend um die Lagerzapfen (24, 25) verschwenkend ausgebildet sind.

10. Abgasleitungssystem (8) nach Anspruch 6, wobei an dem aus dem Einlassende (12) herausragenden Ende der Teilleitung (22) ein radial nach außen abstehender Betätigungskragen (38) ausgebildet ist, wobei das Betätigungselement (40) als ein radialer Steg (39) ausgebildet ist, welcher bei hergestellter Kopplungsverbindung (18) die Teilleitung (22) in Richtung des Auslassendes (14) verschoben anordnet und das Verschlusselement (11) in der Öffnungsstellung gedrängt anordnet.

11. Abgasleitungssystem (8) nach Anspruch 4 oder 5, wobei die Absperrklappe (23) mit einem innerhalb der ersten Abgasleitung (9) angeordneten Betätigungsarm (44) gekoppelt ist, wobei der Betätigungsarm (44) zwischen der Absperrklappe (23) und dem Einlassende (12) angeordnet ist, und wobei der Betätigungsarm (44) in Schließstellung in einer in Richtung des Einlassendes (12) zurückgezogenen Halteposition angeordnet ist und bei hergestellter Kopplungsverbindung (18) in Richtung des Auslassendes (14) bewegt und die Absperrklappe (23) in der Öffnungsstellung haltend angeordnet ist.

12. Abgasleitungssystem (8) nach Anspruch 11, wobei der Betätigungsarm (44) in einer an der ersten Abgasleitung (9) ausgebildeten Führungsschiene (45) axial bewegbar gelagert ist.

13. Abgasleitungssystem (8) nach Anspruch 11 oder 12, wobei der Betätigungsarm (44) endseitig eine Schwenkausnehmung (49) aufweist, in welche ein Schwenkzapfen (48) bewegbar und geführt angeordnet ist, wobei der Schwenkzapfen (48) mit Bezug auf die Schließstellung auf der dem Einlassende (12) zugewandten Seite der Absperrklappe (23) ausgebildet ist.

14. Abgasleitungssystem (8) nach einem der Ansprüche 11 bis 13, wobei das Betätigungselement (40) als ein innenseitig der zweiten Abgasleitung (10) ausgebildeter Stößel (50) ausgebildet ist, welcher bei hergestellter Kopplungsverbindung (18) den Betätigungsarm (44) gegen die Kraft eines mechanischen Rückstellelements in Richtung des Auslassendes (14) bewegt anordnet.

15. Abgasleitungssystem (8) nach einem der vorhergehenden Ansprüche, wobei die lösbare Kopplungsverbindung (18) als eine Gewindeverbindung (17), eine Bajonettverbindung (41), eine Rastverbindung oder eine kraftschlüssige und/oder formschlüssige Klemmverbindung ausgebildet ist.

16. Abgasleitungssystem (8) nach einem der vorhergehenden Ansprüche, wobei die erste Abgasleitung (9) von einer ersten Verbrennungsluftleitung (52) umgeben ist, wobei die zweite Abgasleitung (10) von einer zweiten Verbrennungsluftleitung (53) umgeben ist, wobei die erste Verbrennungsluftleitung (52) und die zweite Verbrennungsluftleitung (53) miteinander verbindbar ausgebildet sind, und wobei ein umlaufender Spalt (54) zwischen der ersten und zweiten Verbrennungsluftleitung (52, 53) und der ersten und zweiten Abgasleitung (9, 10) zur Führung von Verbrennungsluft in Richtung des zweiten Leitungsendes (16) ausgebildet ist.

17. Abgasleitungssystem (8) nach Anspruch 16, wobei an dem ersten Leitungsende (15) der zweiten Abgasleitung (10) ein Außengewinde ausgebildet ist, wobei die zweite Verbrennungsluftleitung (53) an dem mit der ersten Verbrennungsluftleitung (52) zu verbindenden Ende über eine Rastverbindung (56) mit einem Verbindungselement (55) verbunden ist, welches innerhalb der zweiten Verbrennungsluftleitung (53) angeordnet ist und ein Innengewinde aufweist, und wobei das Innengewinde des Verbindungselements (55) mit dem Außengewinde der zweiten Abgasleitung (10) derart in Eingriff bringbar ist, dass durch eine Betätigung der zweiten Verbrennungsluftleitung (53) die Kopplungsverbindung (18) herstellbar oder aufhebbar ist.

18. Abgasleitungssystem (8) nach Anspruch 17, wobei die Rastverbindung (56) von Rasthaken (59, 60) gebildet ist, welche einen ersten Umfangsrand (57) und einen zweiten Umfangsrand (58) des Verbindungselements (55) abwechselnd hintergreifen.

19. Abgasleitungssystem (8) nach Anspruch 18, wobei an dem Verbindungselement (55) wenigstens eine Verbindungsausnehmung (61) ausgebildet ist, und wobei einer der Rasthaken (59) derart in der Verbindungsausnehmung (61) liegend angeordnet ist, dass das Verbindungselement (55) und die zweite Verbrennungsluftleitung (53) formschlüssig miteinander verbunden sind.
